# EUROPÄISCHE PATENTSCHRIFT

(11) **EP 1 047 297 B1**
(45) Veröffentlichungstag und Bekanntmachung des Hinweises auf die Patenterteilung: **02.04.2003**
(21) Anmeldenummer: 98958917.1
(22) Anmeldetag: 24.11.1998
(51) Int. Cl.: A01G 9/02, A01G 9/10

(54) **VORRICHTUNG, INSBESONDERE ZUM ANZÜCHTEN VON PFLANZEN**
DEVICE, ESPECIALLY FOR GROWING PLANTS
DISPOSITIF SERVANT NOTAMMENT A CULTIVER DES PLANTES

(30) Priorität: 14.01.1998 DE 19801141
(43) Veröffentlichungstag der Anmeldung: 02.11.2000
(73) Patentinhaber: Lehmann, Erich, 93326 Abensberg-Arnhofen (DE)
(72) Erfinder: Lehmann, Erich, 93326 Abensberg-Arnhofen (DE)
(74) Vertreter: Volpert, Marcus, Dr.
(86) Internationale Anmeldenummer: EP9807578
(87) Internationale Veröffentlichungsnummer: WO99035898

(56) Entgegenhaltungen:
- EP-A- 0 599 798
- EP-A- 0 724 826
- US-A- 3 800 469
- US-A- 4 057 931
- US-A- 4 510 712
- US-A- 5 094 032

## Beschreibung

Die Erfindung bezieht sich auf eine Vorrichtung, insbesondere zum Anzüchten von Pflanzen, nach dem Oberbegriff des Patentanspruchs 1.

Aus der Praxis sind Vorrichtungen bekannt, welche auch Anzuchttopf oder Anzuchtplatte genannt werden. Bei diesen Töpfen weist der Boden des jeweiligen Topfes meist mehrere Öffnungen auf, durch die überschüssiges Gießwasser aus dem Topf abfließen kann. Üblicherweise haben solche Töpfe einen runden Querschnitt und erweitern sich konisch vom Boden zur oberen Topföffnung hin. Solche Töpfe kommen in vielen Gärtnereien und Baumschulen für die Vermehrung, Anzucht und Weiterkultur von Pflanzen zum Einsatz, dienen aber auch zum Aufstellen von Pflanzen jedweder Art im Haushalt.

Bei solchen Töpfen tritt nun hinsichtlich des Wuchses der Wurzeln folgendes Problem auf Wenn die Wurzel auf die Topfwand trifft, kann sie diese nicht durchdringen und wächst deshalb an der Topfwand entlang spiralförmig nach unten zum Boden des Topfes hin. Sobald die Wurzel den Boden des Topfes erreicht hat, wächst sie ringförmig an der Topfwand entlang, so daß es zu einem unkontrollierten Drehwuchs der Wurzeln im Topf kommt. Die Wurzeln sind nicht in der Lage, in die Mitte des Topfes zurückzuwachsen. Ein derartiger starker Drehwuchs der Wurzeln wirkt sich vor allem beim späteren Auspflanzen nachteilig auf das Wachstum der Pflanze aus.

Die wesentlichen Nachteile sind darin zu sehen, daß
― der im Topf vorherrschende Drehwuchs der Wurzeln auch nach dem Auspflanzen ins Freiland erhalten bleibt und die Wurzeln aus diesem Drehwuchs nur spärlich ausbrechen können. Damit tritt eine Durchwurzelung des Erdreichs nur zögerlich ein. Dies führt zu einer verminderten Wasser- und Nährstoffaufnahme durch die Wurzeln;
― der Drehwuchs im Laufe der Zeit bei zunehmender Dicke der Wurzel zum Einschnüren des Wurzelhalses führt, wodurch die Wasser- und Nährstoffaufnahme zusätzlich beeinträchtigt wird;
― infolge der verminderten Durchwurzelung mit dem Erdreich nur eine ungenügende Verankerung der Pflanze im Boden gegeben ist, so daß beispielsweise bei Laub- oder Nadelbäumen eine wesentlich höhere Gefahr des Umfallens besteht;
― das verzögerte Auswurzeln aus dem Drehwuchs auch einen erhöhten Pflegeaufwand in der ersten Zeit nach dem Auspflanzen bedeutet, da es auf Grund der schlechten Durchwurzelung der Wurzeln mit dem umgebenden Erdreich zum Austrocknen des Wurzelballens kommen kann. Derartige Pflanzen sind demnach häufiger und gegebenenfalls mit größeren Wassermengen zu gießen.

Ferner sind aus der Praxis sogenannte Anzuchtplatten bekannt, welche aus mehreren zusammenhängenden Töpfen bestehen. Ein Verhindern des Drehwuchses der Wurzeln ist zwar bei Anzuchtplatten ohne Boden möglich; allerdings ist dies mit einem erhöhten Arbeitsaufwand verbunden, da die Anzuchtplatten hochzustellen sind und ausnahmslos Anzuchtplatten mit kleinen Töpfen verwendet werden können, da bei Anzuchtplatten mit einen größeren Durchmesser aufweisenden Töpfen das Substrat, wie zum Beispiel Torf, Sand oder Tongemisch, bzw. die Pflanzerde durch den ohne Boden ausgebildeten Topf hindurchfallen würde.

Eine Vorrichtung der eingangs erwähnten Art ist aus der US-A-4 510 712 bekannt. In dieser Druckschrift ist das Problem des spiralförmigen Wuchses der Wurzeln angesprochen. Gemäß einer in dieser Druckschrift angesprochenen Ausführungsform sind vertikal verlaufende, schmale Luftspalte nahe der Topfwand vorgesehen, die sich etwa über die gesamte Topfhöhe erstrecken. Bei dieser Ausführungsform besteht die Gefahr, daß die Luftspalte bereits nach relativ kurzer Zeit durch Wurzeln verstopfen, so daß die bekannte Vorrichtung nicht mehr zufriedenstellend arbeiten kann.

Beispiele für Töpfe mit Öffnungen im Boden sind ferner aus der Zeitschrift Gärtnerbörse 17/1995, Seite 746 bekannt. Der aus der EP-A1-0 599 798 bekannte Pflanztopf weist eine seitliche Entwässerungsöffnung auf, welche in einen Hohlraum mündet, der nach außen hin zumindest teilweise durch Stege begrenzt ist. Gemäß dieser Schrift ist jeder Hohlraum durch Seitenwände begrenzt.

Der Erfindung liegt die Aufgabe zugrunde, eine Vorrichtung insbesondere zum Anzüchten von Pflanzen zu schaffen, bei der der Drehwuchs der Wurzeln effizienter verhindert ist.

Diese Aufgabe wird erfindungsgemäß durch eine Vorrichtung der eingangs erwähnten Art mit den Merkmalen des Patentanspruchs 1 gelöst.

Erfindungsgemäß ist der erste Teil der Öffnung im Topfinnenraum unter Ausbildung seitlicher Öffnungen mit Hilfe eines zumindest teilweise vom Boden beabstandeten Steges abgedeckt. Bei einem Befüllen des Topfes beispielsweise mit Pflanzerde verhindert der Steg ein Eindringen der Pflanzerde in die wenigstens eine Öffnung, so daß diese nicht mit Erde oder Substrat angefüllt wird. Daraus folgt, daß zwischen dem Steg und dem Boden des Topfes auf jeder Stegseite jeweils eine etwa radial verlaufende Durchtrittsöffnung ausgebildet ist. Sobald die Wurzeln durch die Durchtrittsöffnung ins Freie gelangen, kommen sie mit Licht und der umgebenden Atmosphäre, wie zum Beispiel Luft, in Kontakt. Dadurch sterben die Wurzelspitzen ab, und der unerwünschte Drehwuchs der Wurzeln findet nicht mehr statt. Vorteilhaft ist ferner, daß die Pflanze nach dem Umtopfen oder Umpflanzen in einen größeren Topf oder ins Freiland schneller weiterwächst, da die Wurzeln, deren Spitzen im Bereich der Durchtrittsöffnungen abgestorben sind. nach einem Kontakt mit dem Erdreich sofort mit einer Wurzelneubildung beginnen. Das führt zu einem schnelleren Auswurzeln aus dem alten Wurzelballen und zu einer "tragfähigeren" Verbindung zwischen der Pflanze und dem neuen Erdreich bzw. Substrat. Durch die starke Wurzelneubildung kommt es in allen Richtungen zu einer guten Verankerung der Pflanze im Boden, so daß die Gefahr eines Umfallens der Pflanze weniger leicht gegeben ist. Damit ist das Verhindern des Drehwuchses der Wurzeln von Pflanzen auf einfache Weise wirksam möglich.

Vorteilhafterweise ist der Steg im wesentlichen horizontal verlaufend oder V-förmig mit zum ersten Teil der wenigstens einen Öffnung gerichteter Spitze ausgebildet, wobei die Spitze des Steges mit der Unterseite des Bodens vorzugsweise in einer Ebene liegt. Insbesondere bei Töpfen mit kleinen Durchmessern kann die V-förmige Ausbildung des Steges ein Weiterwachsen der Wurzel über den ersten Teil der Öffnung hinweg und damit einen Drehwuchs der Wurzel verhindern.

Gemäß einer Weiterbildung der Erfindung ist der erste, im Boden ausgebildete Teil der wenigstens einen Öffnung rechteckig ausgebildet und hat eine sich in radialer Richtung des Topfes erstreckende Längsachse. Dadurch ist sichergestellt, daß eine am Boden des Topfes in dessen Umfangsrichtung wachsende Wurzel spätestens nach einer vollständigen Drehung in den Bereich der Öffnung gelangt und damit in Kontakt mit Licht und Luft treten kann, so daß ein weiterer Drehwuchs der Wurzel verhindert ist. Durch die spezielle Ausbildung der wenigstens einen Öffnung mit zwei im Boden und in der Topfwand ausgebildeten Teilen kann die erfindungsgemäße Vorrichtung ohne weiteres auf einem Boden abgestellt werden, da der zwischen den Durchtrittsöffnungen befindliche und durch den Steg abgedeckte Bereich (Hohlraum) auch in diesem Fall ausreichend Licht und Sauerstoff erhält.

Vorteilhafterweise ist der zweite, im bodennahen Bereich der Topfwand ausgebildete Teil der wenigstens einen Öffnung trapezförmig sich zum Boden hin erweiternd oder in Form zweier benachbarter Dreiecksöffnungen mit zur Einfüllöffnung des Topfes gerichteten Spitzen ausgebildet. Diese Weiterbildung der Erfindung trägt zu einer guten Stapelfähigkeit des Erfindungsgegenstandes bei. Außerdem erhält durch die trapezförmige oder die doppelt vorgesehene dreiecksförmige Ausbildung des zweiten Teils der wenigstens einen Öffnung dieser in seinem bodennahen Bereich mehr Licht und Sauerstoff als in einem bodenferneren Bereich.

Gemäß einer anderen Weiterbildung der Erfindung ist ein Ende des Steges mit der Topfwand und das gegenüberliegende, andere Ende des Steges mittels einer etwa vertikal verlaufenden Wand mit dem Boden verbunden. Dadurch ist sichergestellt, daß der Steg auch durch ein höheres Gewicht der Pflanzerde oder der Pflanze nicht nach unten gedrückt wird und somit der Querschnitt jeder Durchtrittsöffnung auch bei einer erhöhten, von oben auf den Steg wirkenden Gewichtskraft vollständig erhalten bleibt. Durch eine derartige Abstützung des Steges ist eine Verengung oder Verringerung der Querschnittsfläche der Durchtrittsöffnungen wirksam verhindert. Große Durchtrittsöffnungen ermöglichen, da diese weniger leicht verstopfen, ein sichereres Abfließen überschüssigen Gießwassers.

Vorteilhafterweise ist der Steg geringfügig schmaler und kürzer als der darunterliegende erste, im Boden ausgebildete Teil der wenigstens einen Öffnung und ist die Wand trapezförmig sich zum Boden hin erweiternd ausgebildet sowie leicht zum Topfrand hin geneigt angeordnet. Diese Merkmale des Erfindungsgegenstandes begünstigen, ähnlich wie die vorerwähnte trapezförmige Ausbildung des zweiten Teils der wenigstens einen Öffnung eine gute Stapelfähigkeit des Erfindungsgegenstandes.

Gemäß einer Weiterbildung der Erfindung weist der wenigstens eine Steg auf seiner zum ersten, im Boden ausgebildeten Teil der wenigstens einen Öffnung weisenden Unterseite in Höhe seiner radial verlaufenden Mittellinie über seine gesamte Länge eine ebenfalls radial verlaufende, vertikale Trennwand auf, deren Unterkante mit der Unterseite des Bodens etwa fluchtet. Dadurch ist vor allem bei kleineren Töpfen mit einem schmalen ersten, im Boden ausgebildeten Teil der wenigstens einen Öffnung ein umfangmäßiges Weiterwachsen der Wurzeln und damit ein Überbrücken dieses Teils der Öffnung durch die Wurzeln wirksam verhindert.

Gemäß einer anderen Weiterbildung der Erfindung sind vier Öffnungen vorgesehen und schließen in Umfangsrichtung des Topfes jeweils benachbarte Öffnungen einen Winkel von etwa 90° ein. Dadurch ist der Drehwuchs der Wurzeln weiter reduziert, da eine in Umfangsrichtung des Topfes am Boden entlangwachsende Wurzel frühzeitig auf eine Öffnung, damit auf Licht und Luft trifft und an ihrer Spitze abstirbt.

Gemäß einer vorteilhaften Weiterbildung der Erfindung weist die Topfwand wenigstens eine, im wesentlichen vertikal verlaufende Führungsrippe auf, die sich von der Innenseite der Topfwand weg in radialer Richtung zum Topfinnenraum hin erstreckt, wobei vorzugsweise die Führungsrippe einen etwa dreieckigen Querschnitt hat, welcher vom Boden zur Einfüllöffnung des Topfes hin abnimmt. Durch dieses Merkmal ist ein Drehwuchs der Pflanzenwurzeln weiter reduziert, da die Wurzeln schon oberhalb des Bodens an einem Weiterwachsen in Umfangsrichtung des Topfes gehindert sind. Die Wurzeln werden also schnell zum Boden hin umgelenkt und kommen daher schon bald mit einer der erfindungsgemäßen Öffnungen in Kontakt. Der nach oben hin abnehrnende Querschnitt der Führungsrippen erleichtert das Stapeln der Vorrichtung, da den Führungsrippen im Sinne einer Doppelwirkung auch eine Zentrierwirkung zukommt.

Vorteilhafterweise sind vier Führungsrippen vorgesehen und schließen in Umfangsrichtung des Topfes jeweils benachbarte Führungsrippen einen Winkel von etwa 90° ein, wobei gemäß einer bevorzugten Weiterbildung der Erfindung Führungsrippen und Öffnungen in Umfangsrichtung des Topfes einander abwechseln oder derart zusammenfallen, daß sich jeweils eine Führungsrippe von einem Steg weg längs der Topfwand erstreckt. Damit gelangen die durch eine Führungsrippe zum Boden hin umgelenkten Wurzeln nach einer 1/8- bzw. 1/4-Umdrehung in den Bereich der Öffnung, so daß der Drehwuchs frühzeitig wirksam verhindert ist.

Ausführungsbeispiele des Erfindungsgegenstandes werden nachfolgend an Hand der Zeichnung näher erläutert. Es zeigen:
- Fig. 1: eine perspektivische Ansicht eines ersten Ausführungsbeispiels einer Vorrichtung zum Anzüchten von Pflanzen, wobei die Vorrichtung zwecks einer besseren zeichnerischen Darstellung der erfindungsgemäßen Merkmale auf dem Kopf stehend, d.h. mit dem Boden nach oben, dargestellt ist;
- Fig. 2: eine Draufsicht auf das in Fig. 1 gezeigte Ausführungsbeispiel der Vorrichtung;
- Fig. 3: eine schematische, perspektivische Ansicht eines Vertikalschnitts durch die Vorrichtung zum Anzüchten von Pflanzen;
- Fig. 4: eine schematische, vergrößerte Ansicht eines Teils der in Fig. 3 gezeigten Vorrichtung;
- Fig. 5: eine perspektivische Ansicht eines anderen Ausführungsbeispiels der Vorrichtung mit V-förmig ausgebildeten Stegen;
- Fig. 6: eine perspektivische Ansicht eines weiteren Ausführungsbeispiels der Vorrichtung von unten mit oberhalb der Stege vorgesehenen Führungsrippen; und
- Fig. 7: eine schematische Draufsicht auf die Vorrichtung gemäß Fig.6.

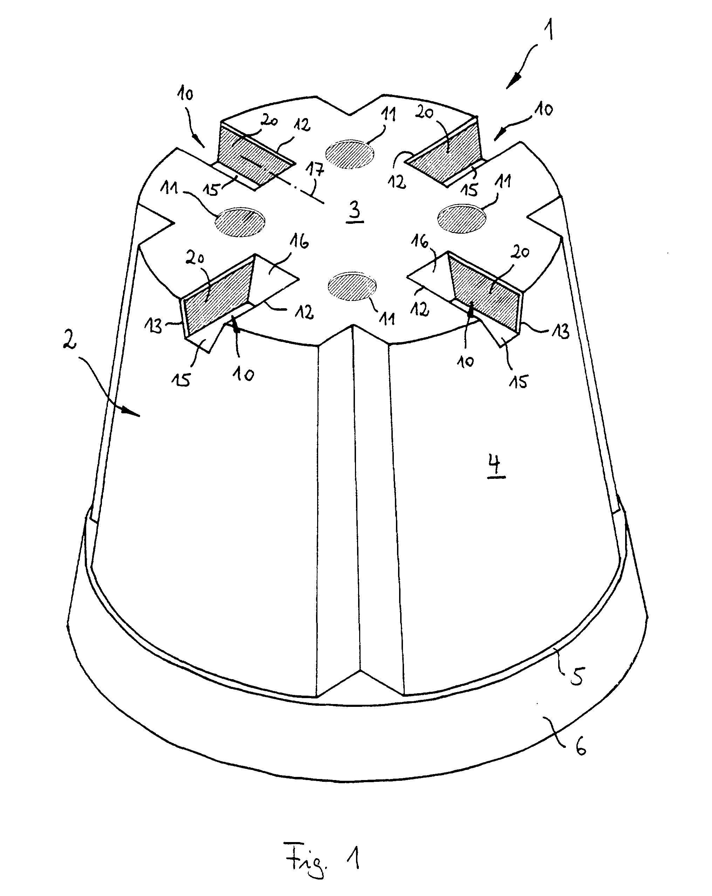

In den Fig. 1 bis 4 ist ein erstes Ausführungsbeispiel einer Vorrichtung 1 insbesondere zum Anzüchten von Pflanzen schematisch in einer perspektivischen Ansicht dargestellt. In dem gewählten Ausführungsbeispiel ist die Vorrichtung 1 ein Topf 2, welcher in Fig. 1, mit seinem Boden 3 nach oben, also auf dem Kopf stehend, dargestellt ist.

Der Topf 2 hat eine mit dem Boden 3 verbundene Topfwand 4, welche einen runden Querschnitt einschließt. Die Topfwand 4 geht gemäß Fig. 3 über einen etwa horizontal verlaufenden Absatz 5 in einen hochgezogenen Rand 6 über. Die von dem Rand 6 umschlossene Fläche bildet die Einfüllöffnung 7 des Topfes.

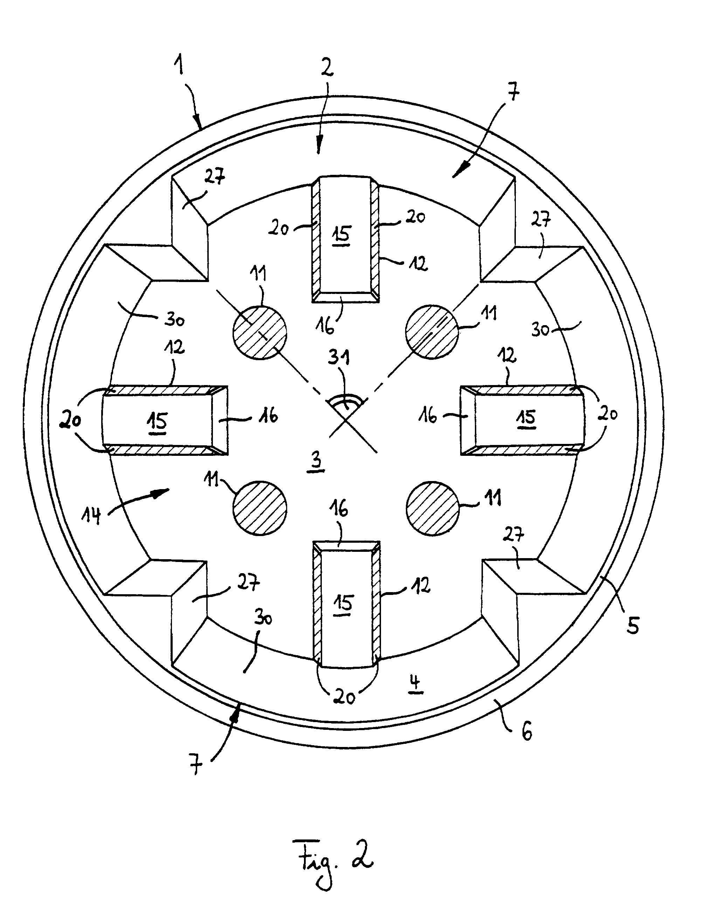

Gemäß den Fig. 1 und 2 ist die Topfwand 4 konisch, sich zur Einfüllöffnung 7 hin erweiternd ausgebildet, so daß die einzelnen Töpfe ohne weiteres übereinandergestapelt werden können und in diesem Zustand der Absatz 5 des jeweils höheren Topfes auf dem Rand 6 des darunterliegenden Topfes aufliegt.

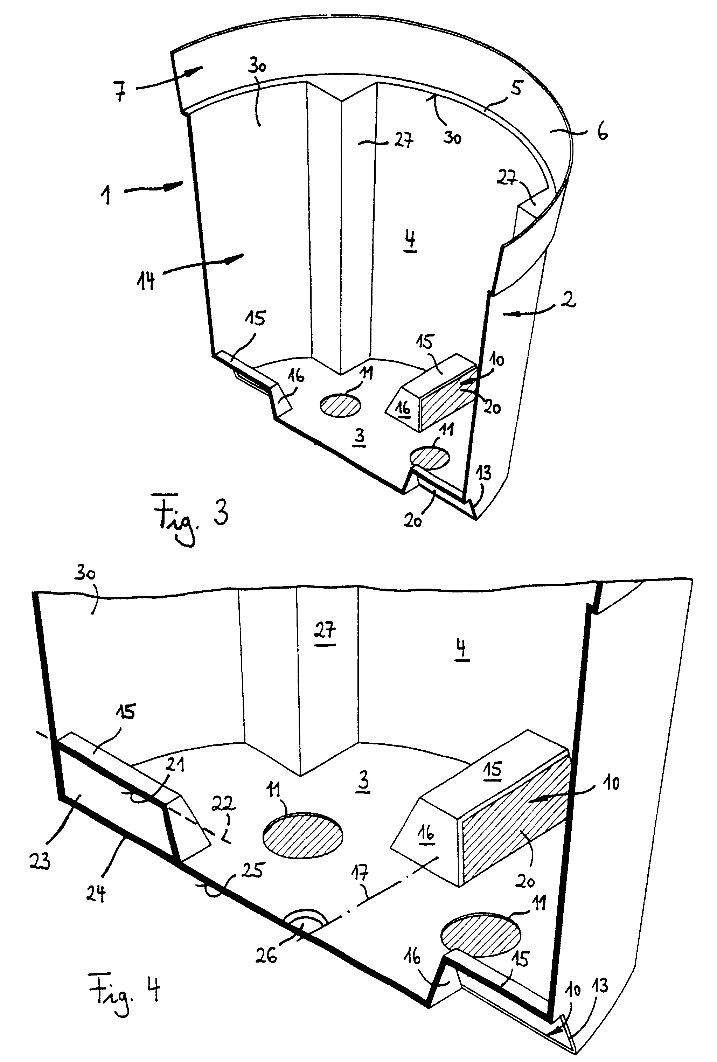

Im Boden 3 des Topfes sind erfindungsgemäß mehrere Öffnungen 10, 11 vorgesehen, wobei die einen Öffnungen 11 in Form runder Löcher ausgebildet sind. Die anderen Öffnungen 10 weisen jeweils einen ersten, im Boden 3 ausgebildeten und sich bis zur Topfwand 4 erstreckenden Teil 12 und einen unmittelbar daran angrenzenden bzw. damit verbundenen zweiten, im bodennahen Bereich der Topfwand 4 ausgebildeten Teil 13 auf. wobei, wie genauer in den Fig. 3 und 4 dargestellt, der erste, im Boden 3 ausgebildete Teil 12 der Öffnung 10 im Topfinnenraum 14 jeweils mittels eines zumindest teilweise vom Boden 3 beabstandeten, horizontal verlaufenden Steges 15 abgedeckt ist. Das eine Ende des Steges 15 ist mit der Topfwand 4 und das gegenüberliegende, andere Ende des Steges 15 ist mittels einer etwa vertikal verlaufenden Wand 16 mit dem Boden 3 verbunden. Um die Stapelfähigkeit der Töpfe 2 zu gewährleisten bzw. zu verbessern, ist der Steg 15 geringfügig schmaler und kürzer als der darunterliegende erste, im Boden 3 ausgebildete Teil 12 der Öffnung 10. Außerdem ist die Wand 16 zum Verbinden des innenliegenden Stegendes mit dem Boden 3 trapezförmig sich zum Boden 3 hin erweiternd ausgebildet sowie leicht zur Topfwand 4 hin geneigt angeordnet.

Der erste Teil 12 der Öffnung 10 ist rechteckig ausgebildet und hat eine sich in radialer Richtung des Topfes 2 erstreckende Längsachse 17, welche in Fig. 1 bei lediglich einer Öffnung 10 schematisch angedeutet ist. Aus Fig. 1 ist ferner ersichtlich, daß die Länge des ersten Teils 12 der Öffnung 10 größer als dessen Breite ist.

Der zweite, im bodennahen Bereich der Topfwand 4 ausgebildete Teil 13 der Öffnung 10 ist gemäß der in den Fig. 1 bis 4 gezeigten ersten Ausführungsform trapezförmig sich zum Boden 3 hin erweiternd ausgebildet, so daß die Form dieses zweiten Teils 13 der Öffnung 10 etwa der Form der den Steg 15 abstützenden Wand 16 entspricht.

Durch die erfindungsgemäße Ausbildung der Öffnungen 10 ergibt sich auf jeder Seite jedes Steges 15 eine in den Fig. 1 bis 4 jeweils schraffierte Durchtrittsöffnung 20. Es wird ausdrücklich darauf hingewiesen, daß der besseren Übersicht halber die Durchtrittsöffnungen 20 sowie die Öffnungen 11 im Boden 3 schraffiert dargestellt sind und, anders als sonst in zeichnerischen Darstellungen üblich, keinen Schnitt symbolisieren. Erfindungsgemäß erstreckt sich jede Durchtrittsöffnung 20 bis unmittelbar zur Topfwand 4 bzw. an die Topfwand 4.

Eine Weiterbildung des Erfindungsgegenstandes ist im linken Teil der Fig. 4 gezeigt. Der dort dargestellte Steg 15 weist auf seiner Unterseite 21 in Höhe seiner radial verlaufenden Mittellinie 22 über seine gesamte Länge eine ebenfalls radial verlaufende, vertikale Trennwand 23 auf, deren Unterkante 24 mit der Unterseite 25 des Bodens 3 etwa fluchtet. Die Trennwand 23 unterteilt also den zwischen dem Steg 15, der Wand 16, den Durchtrittsöffnungen 20 und dem ersten Teil 12 der Öffnung 10 begrenzten Raum mittig in radialer Richtung. Auch der zweite Teil 13 der Öffnung 10, welcher sich im bodennahen Bereich der Topfwand 4 befindet, ist mittig durch die Trennwand 23 unterteilt.

Gemäß den Fig. 1 und 2 sind neben vier runden Öffnungen 11 im Boden insgesamt vier rechtekkige Öffnungen 10 vorgesehen, wobei in Umfangsrichtung des Topfes 2 jeweils benachbarte Öffnungen 10 etwa einen Winkel 26 von 90° einschließen (vgl. Fig. 4). Es ist klar, daß die Öffnungen 10 auch einen von 90° abweichenden Winkel einschließen können. Dies gilt insbesondere für Töpfe mit größerem Durchmesser und/oder für Töpfe mit mehr oder weniger als vier Offnungen.

Gemäß einer anderen Weiterbildung der Erfindung weist die Topfwand 4 mehrere im wesentlichen vertikal verlaufende Führungsrippen 27 auf, die sich von der Innenseite 30 der Topfwand 4 weg in radialer Richtung zum Topfinnenraum 14, ausgehend vom Absatz 5 bis zum Boden 3 hin, erstrecken. Die Figuren lassen ferner erkennen, daß jede Führungsrippe 27 einen etwa dreieckigen Querschnitt hat und daß der Topf 2 bei dem gewählten Ausführungsbeispiel vier Führungsrippen aufweist, wobei in Umfangsrichtung des Topfes 2 jeweils benachbarte Führungsrippen 27 einen Winkel 31 von etwa 90° einschließen und Führungsrippen 27 sowie Öffnungen 10 in Umfangsrichtung des Topfes 2 einander abwechseln. Dies ist besonders deutlich in der in Fig. 2 dargestellten schematischen Draufsicht auf einen erfindungsgemäß ausgebildeten Topf 2 zu sehen. Es ist klar, daß die Führungsrippen 27 parallel zur Topfwand 4 verlaufen und deshalb einander gegenüberliegende Führungsrippen 27 sich konisch zum Boden 3 hin verjüngend ausgebildet sind und daß mehr oder weniger als die gezeigten vier Führungsrippen vorgesehen sein können, wodurch sich auch der von benachbarten Führungsrippen eingeschlossene Winkel 31 ändern kann. Der vorgenannte Winkel 31 von 90° ist daher lediglich beispielhaft angegeben. Die Anordnung und Ausbildung der Führungsrippen erleichtert ferner das Ineinanderstapeln mehrerer Töpfe 2, da bei einem Einsetzen eines Topfes von oben her in einen anderen, unteren Topf die Führungsrippen 27 jeweils ineinandergreifen und schon dadurch die Öffnungen 10 des oberen Topfes passend zu den Stegen 15 des unteren Topfes ausgerichtet sind.

Der Topf 2 kann beispielsweise aus Kunststoff bestehen und im Spritzgieß- oder Tiefziehverfahren hergestellt werden.

Es ist klar, daß die erfindungsgemäße Vorrichtung 1 einen beliebigen Querschnitt haben kann, vorzugsweise jedoch rund oder eckig ausgebildet ist. Es ist ferner möglich, die Öffnungen 11 überhaupt nicht vorzusehen oder, sofern die runden Öffnungen 11 im Boden ausgebildet sind, Form und Anzahl dieser Öffnungen zu variieren. Außerdem ist die Erfindung nicht auf die gezeigte Form und Anzahl der rechteckigen Öffnungen 10 mit den ebenfalls rechteckigen Durchtrittsöffnungen 20 beschränkt. Es ist ebenso gut möglich, beispielsweise abgerundete oder halbkreisförmige Öffnungen 10 und entsprechend gekrümmte Durchtrittsöffnungen 20 vorzusehen

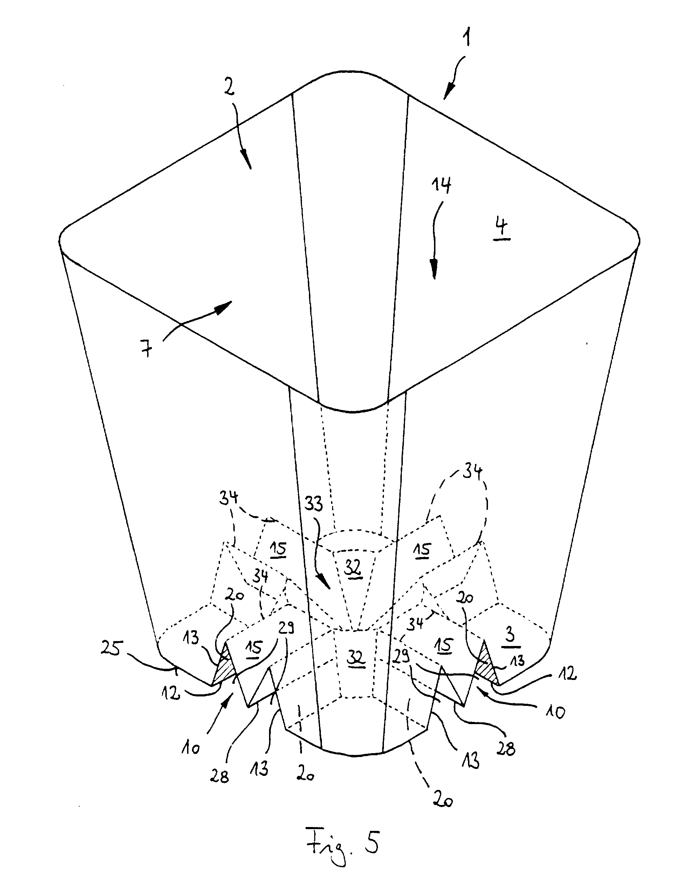

Ein weiteres Ausführungsbeispiel der erfindungsgemäßen Vorrichtung 1 ist in Fig. 5 gezeigt, wobei im Vergleich zum ersten Ausführungsbeispiel gemäß den Fig. 1 - 4 gleiche Merkmale gleiche Bezugzeichen aufweisen.

Bei dieser Ausführungsform ist der Steg 15 V-förmig mit zum ersten Teil 12 der Öffnung 10 gerichteter Spitze 28 ausgebildet. Dadurch erhält der zweite Teil 13 der Öffnung 10 die Form zweier benachbarter Dreiecksöffnungen 29 mit jeweils zur Einfüllöffnung 7 des Topfes 2 gerichteten Spitzen 34. Gemäß Fig. 5 liegt die Spitze 28 jedes Steges 15 in einer Ebene mit der Unterseite 25 des Bodens 3 des Topfes 2.

Auch bei dieser Ausführungsform sind die sichtbaren Durchtrittsöffnungen 20 schraffiert dargestellt. Die Schraffur stellt ähnlich wie im Falle der Fig. 1 - 4 bezüglich der Durchtrittsöffnungen 20 keinen Schnitt, sondern eine offene Fläche dar, über die die Wurzeln aus dem Topfinnenraum 14 nach außen und damit in Kontakt mit Licht und Luft gelangen können.

Benachbarte Stege 15 sind an ihrem zum Topfmittelpunkt weisenden Ende über Wände 32 miteinander derart verbunden, daß sich im Zentrum des Topfes 2 eine muldenförmige Vertiefung 33 ausbildet. Es ist klar, daß sowohl die Durchtrittsöffnungen 20 als auch die Seitenflächen jedes Steges 15 zur Vertikalen geneigt verlaufen. Dasselbe gilt für die Ausbildung der Wände 32. Dadurch ist auch ein Topf 2 dieser Ausführungsform gut stapelbar

Die Vorrichtung gemäß des in Fig. 5 gezeigten Ausführungsbeispiels ist insbesondere für kleine, vorzugsweise etwa quadratisch mit abgerundeten Ecken ausgebildete Töpfe geeignet. Die Abmessungen derartiger Töpfe liegen etwa zwischen 7 cm x 7 cm x 7 cm (Länge x Breite x Höhe) und 13 cm x 13 cm x 13 cm (Länge x Breite x Höhe). Töpfe, welche die letztgenannten Volumina überschreiten, sind vornehmlich gemäß der in den Fig. 1 - 4 gezeigten Ausführungsform gestaltet.

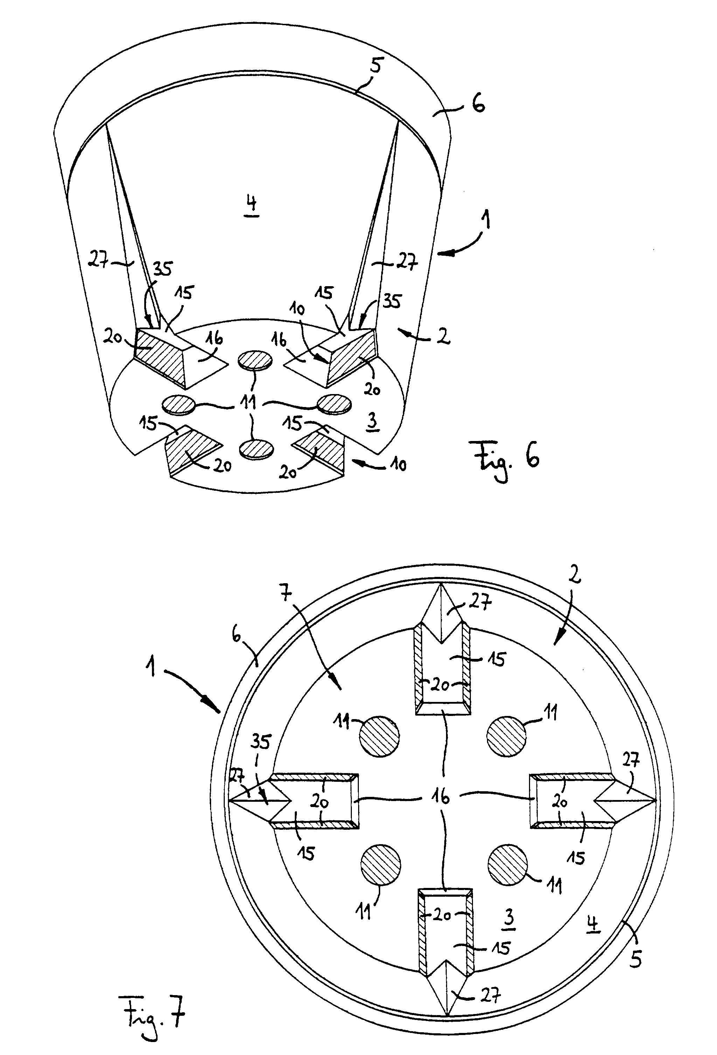

Noch eine andere Ausführungsform der erfindungsgemäßen Vorrichtung 1 ist in den Fig. 6 und 7 gezeigt, wobei auch in diesen Darstellungen die schraffierten Flächen durchgehende Öffnungen zeigen

Gemäß der perspektivischen Darstellung in Fig. 6 ist jede Führungsrippe 27 oberhalb eines Steges 15 angeordnet. Somit erstreckt sich jeweils eine Führungsrippe 27 von einem Steg 15 weg längs der Topfwand 4 zum oberen Rand 6 des Topfes hin. Gemäß dieser Ausführungsform nimmt der Querschnitt jeder Führungsrippe 27 vom Steg 15 zur Einfüllöffnung bzw. zum Rand 6 des Topfes 2 hin ab, so daß jede Führungsrippe nach oben hin spitz zuläuft. Aus Fig. 6 ist ferner ersichtlich, daß jeder Steg 15 unmittelbar am unteren Ende jeder Führungsrippe 27 endet. Dadurch entsteht am topfwandnahen Ende jedes Steges eine etwa dreieckige Ausnehmung 35, deren Fläche etwa der Querschnittsfläche des unteren Endes jeder Führungsrippe 27 entspricht. Diese Ausführungsform hat den Vorteil, daß noch mehr Licht in die Öffnungen 10 einfällt, so daß die Wurzelspitzen im Bereich der Durchtrittsöffnungen 20 um so eher mit Luft und Licht in Kontakt kommen und dadurch absterben.

Nachfolgend wird die Handhabung der erfindungsgemäßen Vorrichtung zum Anzüchten von Pflanzen mit Bezug auf das in den Fig. 1 bis 4 gezeigte Ausführungsbeispiel näher erläutert.

In den mit seinem Boden 3 nach unten angeordneten Topf 2 wird durch die obere Einfüllöffnung 7 zunächst das geeignete Substrat, wie zum Beispiel Pflanzerde, eingefüllt. Anschließend wird der Pflanzensamen, -ableger, der Steckling oder die Jungpflanze in das Substrat eingepflanzt. Die Größe des Topfes ist von der Größe der jeweiligen Pflanze abhängig. Bei der Anzucht bzw. bei der Weiterkultur der Pflanzen ist es häufig notwendig, die Pflanzen entsprechend ihrer Größe umzutopfen, d.h. zunächst in kleinere Töpfe einzupflanzen und später etwa alle ein bis zwei Jahre in größere Töpfe umzutopfen.

Die sich bildenden Wurzeln sind bestrebt, vom oberirdischen Teil der Pflanze weg sternförmig nach unten zu wachsen. Sofern die Wurzeln (nicht näher gezeigt) auf die Topfwand 4 treffen, wachsen sie an dieser entlang spiralförmig weiter nach unten, bis sie auf eine der Führungsrippen 27 treffen. Die Führungsrippen lenken die Wurzeln in radialer oder zum Boden hin in axialer Richtung um, so daß bei weiterem Wurzelwuchs die Wurzelspitzen bald auf den Boden 3 und bei weiterer umfangsseitiger Ausdehnung auf eine der Durchtrittsöffnungen 20 treffen. Da sich in den Durchtrittsöffnungen kein Substrat sondern vielmehr Licht und Luft befinden, sterben die Wurzelspitzen im Bereich der Durchtrittsöffnungen 20 ab. Dadurch ist der unerwünschte Drehwuchs der Wurzeln auf einfache Weise wirksam verhindert.

## Patentansprüche

1. Vorrichtung, insbesondere zum Anzüchten von Pflanzen,
mit zumindest einem Topf (2), welcher in seinem Boden (3) wenigstens eine Öffnung (10, 11) aufweist, wobei die wenigstens eine Öffnung (10) einen ersten, im Boden (3) ausgebildeten und sich bis zur Topfwand (4) erstreckenden Teil (12) und einen daran angrenzenden zweiten, in der Topfwand (4) ausgebildeten Teil (13) aufweist, und
mit wenigstens einem Steg (15), der zumindest teilweise vom Boden (3) beabstandet den ersten, im Boden (3) ausgebildeten Teil (12) der wenigstens einen Öffnung (10) im Topfinnenraum (14) unter Ausbildung seitlicher Durchtrittsöffnungen (20) abgedeckt,
**dadurch gekennzeichnet, daß**
der zweite Teil (13) der wenigstens einen Öffnung (10) ausschließlich im bodennahen Bereich der Topfwand (4) ausgebildet ist,
der erste Teil (12) der wenigstens einen Öffnung (10) und jede Durchtrittsöffnung (20) eine sich in radialer Richtung des Topfes (2) erstreckende Längsachse haben und
ein Ende des wenigstens eines Steges (15) am zweiten Teil (13) der wenigstens einen Öffnung (10) mit der Topfwand (4) verbunden ist.

2. Vorrichtung nach Anspruch 1, **dadurch gekennzeichnet, daß** der Steg (15) im wesentlichen horizontal verlaufend ausgebildet ist.

3. Vorrichtung nach Anspruch 1, **dadurch gekennzeichnet, daß** der Steg (15) im wesentlichen V-förmig mit zum ersten Teil (12) der wenigstens einen Öffnung (10) gerichteter Spitze (28) ausgebildet ist.

4. Vorrichtung nach Anspruch 3, **dadurch gekennzeichnet, daß** die Spitze (28) des Steges (15) mit der Unterseite (25) des Bodens (3) in einer Ebene liegt.

5. Vorrichtung nach Anspruch 2, **dadurch gekennzeichnet, daß** der zweite Teil (13) der wenigstens einen Öffnung (10) trapezförmig sich zum Boden (3) hin erweiternd ausgebildet ist.

6. Vorrichtung nach Anspruch 3 oder 4, **dadurch gekennzeichnet, daß** der zweite Teil (13) der wenigstens einen Öffnung (10) in Form zweier benachbarter Dreiecksöffnungen (29) mit zur Einfüllöffnung (7) des Topfes (2) gerichteten Spitzen (34) ausgebildet ist.

7. Vorrichtung nach einem der Ansprüche 1, 2 oder 5, **dadurch gekennzeichnet, daß** das andere Ende des Steges (15) mittels einer etwa vertikal verlaufenden Wand (16) mit dem Boden (3) verbunden ist.

8. Vorrichtung nach Anspruch 7, **dadurch gekennzeichnet, daß** der Steg (15) geringfügig schmaler und kürzer als der darunterliegende erste, im Boden (3) ausgebildete Teil (12) der wenigstens einen Öffnung (10) ist und die Wand (16) trapezförmig sich zum Boden (3) hin erweiternd ausgebildet sowie leicht zur Topfwand (4) hin geneigt angeordnet ist.

9. Vorrichtung nach einem der Ansprüche 1, 2, 5, 7 oder 8, **dadurch gekennzeichnet, daß** wenigstens ein Steg (15) auf seiner zum ersten, im Boden (3) ausgebildeten Teil (12) der wenigstens einen Öffnung (10) weisenden Unterseite (21) in Höhe seiner radial verlaufenden Mittellinie (22) über seine gesamte Länge eine ebenfalls radial verlaufende, vertikale Trennwand (23) aufweist, deren Unterkante (24) mit der Unterseite (25) des Bodens (3) etwa fluchtet.

10. Vorrichtung nach einem der vorhergehenden Ansprüche, **dadurch gekennzeichnet, daß** vier Öffnungen (10) vorgesehen sind und in Umfangsrichtung des Topfes (2) jeweils benachbarte Öffnungen (10) einen Winkel (26) von etwa 90° einschließen.

11. Vorrichtung nach einem der vorhergehenden Ansprüche, **dadurch gekennzeichnet, daß** die Topfwand (4) wenigstens eine im wesentlichen vertikal verlaufende Führungsrippe (27) aufweist, die sich von der Innenseite (30) der Topfwand (4) weg in radialer Richtung zum Topfinnenraum (14) hin erstreckt.

12. Vorrichtung nach Anspruch 11, **dadurch gekennzeichnet, daß** die wenigstens eine Führungsrippe (27) einen etwa dreieckigen Querschnitt hat, welcher vorzugsweise vom Boden (3) zur Einfüllöffnung (7) des Topfes (2) hin abnimmt.

13. Vorrichtung nach Anspruch 11 oder 12, **dadurch gekennzeichnet, daß** vier Führungsrippen (27) vorgesehen sind und in Umfangsrichtung des Topfes (2) jeweils benachbarte Führungsrippen (27) einen Winkel (31) von etwa 90° einschließen.

14. Vorrichtung zumindest nach den Ansprüchen 10 und 13, **dadurch gekennzeichnet, daß** Führungsrippen (27) und Öffnungen (10) in Umfangsrichtung des Topfes (2) einander abwechseln oder derart zusammenfallen, daß sich jeweils eine Führungsrippe (27) von einem Steg (15) weg längs der Topfwand (4) erstreckt.

## Claims

1. Device, especially for growing plants, comprising
at least one pot (2) having at least one opening (10, 11) in its base (3), the at least one opening (10) having a first part (12) formed in the base (3) and extending up to the pot wall (4) and an adjacent second part (13) formed in the pot wall (4), and
at least one ridge (15) which is at least partly set at a distance from the base (3) and covers the first part (12) of the at least one opening (10) formed in the base (3) in the inner space (14) of the pot by forming lateral passage openings (20),
**characterized in that**
the second part (13) of the at least one opening (10) is only formed in the region of the pot wall (4) close to the base,
the first part (12) of the at least one opening (10) and each passage opening (20) have a longitudinal axis extending in the radial direction of the pot (2) and
one end of the at least one ridge (15) is connected to the pot wall (4) at the second part (13) of the at least one opening (10).

2. Device according to claim 1, **characterized in that** the ridge (15) is substantially horizontal.

3. Device according to claim 1, **characterized in that** the ridge (15) is substantially V-shaped having a tip (28) directed to the first part (12) of the at least one opening (10).

4. Device according to claim 3, **characterized in that** the tip (28) of the ridge (15) lies in the same plane like the bottom side (25) of the base (3).

5. Device according to claim 2, **characterized in that** the second part (13) of the at least one opening (10) trapezoidally enlarges toward the base (3).

6. Device according to claim 3 or 4, **characterized in that** the second part (13) of the at least one opening (10) is shaped in the form of two adjacent triangular openings (29) having tips (34) directed to the filling opening (7) of the pot (2).

7. Device according to one of claims 1, 2 or 5, **characterized in that** the other end of the ridge (15) is connected with the base (3) by means of a vertical wall (16).

8. Device according to claim 7, **characterized in that** the ridge (15) is slightly narrower and shorter than the underlying first part (12) of the at least one opening (10) formed in the base (3) and that the wall (16) trapezoidally enlarges toward the base (3) and that the wall (16) is slightly inclined toward the pot wall (4).

9. Device according to one of claims 1, 2, 5, 7 or 8, **characterized in that** at least one ridge (15) comprises on its bottom side (21) directed to the first part (12) of the at least one opening (10) formed in the base (3) in the level of its radial center line (22) over its entire length an equally radial, vertical partition wall (23) the bottom edge (24) of which is nearly aligned with the bottom side (25) of the base (3).

10. Device according to one of the foregoing claims, **characterized in that** four openings (10) are provided and that adjacent openings (10) enclose an angle (26) of about 90° in the circumferential direction of the pot (2), respectively.

11. Device according to one of the foregoing claims, **characterized in that** the pot wall (4) comprises at least one substantially vertical guide rib (27) which extends in the radial direction away from the inner side (30) of the pot wall (4) to the inner space of the pot.

12. Device according to claim 11, **characterized in that** the at least one guide rib (27) has a nearly triangular cross-section which decreases preferably from the base (3) toward the filling opening (7) of the pot (2).

13. Device according to claim 11 or 12, **characterized in that** four guide ribs (27) are provided and that adjacent guide ribs (27) enclose an angle (31) of about 90° in the circumferential direction of the pot (2), respectively.

14. Device at least according to claims 10 and 13, **characterized in that** guide ribs (27) alternate with openings (10) in the circumferential direction of the pot (2) or coincide with openings (10) such that one guide rib (27) extends away from each ridge (15) along the pot wall (4).

## Revendications

1. Dispositif, en particulier pour la culture de plantes,
avec au moins un pot (2) qui présente au moins une ouverture (10, 11) dans son fond (3), l'ouverture (10) au nombre d'au moins une présentant une première partie (12) formée dans le fond (3) et s'étendant jusqu'à la paroi (4) du pot et une deuxième partie (13) adjacente à la première et formée dans la paroi (4) du pot, et
avec au moins une barrette (15) qui recouvre au moins partiellement, à distance du fond (3), la première partie (12) formée dans le fond (3) de l'ouverture (10) au nombre d'au moins une dans l'intérieur (14) du pot en formant des passages latéraux (20),
**caractérisé en ce que**
la deuxième partie (13) de l'ouverture (10) au nombre d'au moins une est formée exclusivement dans la partie de la paroi (4) du pot proche du fond,
la première partie (12) de l'ouverture (10) au nombre d'au moins une et chaque passage (20) possèdent un axe longitudinal s'étendant dans la direction radiale du pot (2), et
une extrémité de la barrette (15) au nombre d'au moins une est reliée à la paroi (4) du pot sur la deuxième partie (13) de l'ouverture (10) au nombre d'au moins une.

2. Dispositif selon la revendication 1, **caractérisé en ce que** la barrette (15) s'étend pour l'essentiel horizontalement.

3. Dispositif selon la revendication 1, **caractérisé en ce que** la barrette (15) est formée pour l'essentiel en forme de V avec une pointe (28) dirigée vers la première partie (12) de l'ouverture (10) au nombre d'au moins une.

4. Dispositif selon la revendication 3, **caractérisé en ce que** la pointe (28) de la barrette (15) est située dans le même plan que la face inférieure (25) du fond (3).

5. Dispositif selon la revendication 2, **caractérisé en ce que** la deuxième partie (13) de l'ouverture (10) au nombre d'au moins est formée en s'élargissant en trapèze en direction du fond (3).

6. Dispositif selon la revendication 3 ou 4, **caractérisé en ce que** la deuxième partie (13) de l'ouverture (10) au nombre d'au moins une est réalisée sous la forme de deux ouvertures triangulaires (29) voisines avec des pointes (34) dirigées vers l'ouverture de remplissage (7) du pot (2).

7. Dispositif selon l'une des revendications 1, 2 ou 5, **caractérisé en ce que** l'autre extrémité de la barrette (15) est reliée au fond (3) au moyen d'une paroi (16) s'étendant approximativement à la verticale.

8. Dispositif selon la revendication 7, **caractérisé en ce que** la barrette (15) est légèrement plus étroite et plus courte que la première partie (12) de l'ouverture (10) au nombre d'au moins une formée dans le fond (3) et située au-dessous, et la paroi (16) est formée en s'élargissant en trapèze en direction du fond (3) et est légèrement inclinée en direction de la paroi (4) du pot.

9. Dispositif selon l'une des revendications 1, 2, 5, 7 ou 8, **caractérisé en ce qu'**au moins une barrette (15) présente, sur sa face inférieure (21) tournée vers la première partie (12) de l'ouverture (10) au nombre d'au moins une formée dans le fond (3), à hauteur de sa ligne médiane (22) d'extension radiale et sur toute sa longueur, une cloison verticale (23) d'extension également radiale, dont le bord inférieur (24) est approximativement aligné avec la face inférieure (25) du fond (3).

10. Dispositif selon l'une des revendications précédentes, **caractérisé en ce que** quatre ouvertures (10) sont prévues et des ouvertures (10) voisines dans la direction circonférentielle du pot (2) définissent un angle (26) d'environ 90°.

11. Dispositif selon l'une des revendications précédentes, **caractérisé en ce que** la paroi (4) du pot présente au moins une nervure de guidage (27) d'extension sensiblement verticale, qui s'étend radialement depuis l'intérieur (30) de la paroi (4) du pot en direction de l'intérieur (14) du pot.

12. Dispositif selon la revendication 11, **caractérisé en ce que** la nervure de guidage (27) au nombre d'au moins une possède une section approximativement triangulaire, qui diminue de préférence du fond (3) vers l'ouverture de remplissage (7) du pot (2).

13. Dispositif selon la revendication 11 ou 12, **caractérisé en ce que** quatre nervures de guidage (27) sont prévues et des nervures de guidage (27) voisines dans la direction circonférentielle du pot (2) définissent un angle (31) d'environ 90°.

14. Dispositif selon les revendications 10 et 13, **caractérisé en ce que** les nervures de guidage (27) et les ouvertures (10) alternent dans la direction circonférentielle du pot (2) ou coïncident de telle manière qu'une nervure de guidage (27) s'étend à chaque fois depuis une barrette (15) le long de la paroi (4) du pot.
